# EUROPÄISCHE PATENTSCHRIFT

(11) **EP 2 181 630 B1**
(45) Veröffentlichungstag und Bekanntmachung des Hinweises auf die Patenterteilung: **27.06.2012**
(21) Anmeldenummer: 09173313.9
(22) Anmeldetag: 16.10.2009
(51) Int. Cl.: A47J 31/36

(54) **Heißgetränkezubereitungsmaschine**
Hot beverage preparation machine
Machine de préparation de boissons chaudes

(30) Priorität: 03.11.2008 DE 102008043415
(43) Veröffentlichungstag der Anmeldung: 05.05.2010
(73) Patentinhaber: BSH Bosch und Siemens Hausgeräte GmbH, 81739 München (DE)
(72) Erfinder: Gerl, Bernhard, 83278, Traunstein (DE); Hauser, Andreas, 83370, Seeon (DE); Irl, Florian, 84453, Mühldorf am Inn (DE); Spiel, Johannes, 83132, Pittenhart (DE)

(56) Entgegenhaltungen:
- CH-A- 367 301
- FR-A- 1 184 141
- GB-A- 956 109
- US-A- 4 602 558

## Beschreibung

Die vorliegende Erfindung betrifft eine Heißgetränkezubereitungsmaschine mit einer Brüheinheit, mit einer Aufnahme- oder Auffangvorrichtung für feste Brühreste, mit einem Flüssigkeitszulauf und einem Anschluss des Flüssigkeitszulaufs zum Durchmischen von Brühresten mit Flüssigkeit.

Um eine hohe Bedienerfreundlichkeit zu gewährleisten, werden Heißgetränkezubereitungsmaschinen, insbesondere Kaffeevollautomaten, mit Ver- und Entsorgungseinheiten ausgestattet, die einen möglichst lang andauernden Betrieb ohne Wartungsarbeiten gestatten. Die weitgehende Automatisierung von Versorgungseinheiten, beispielsweise für Frischwasser, Kaffeebohnen bzw. Kaffeemehl, Milch und andere Zutaten ist mittlerweile weitgehend optimiert. Die Entsorgung von Zubereitungsresten hingegen ist auch heute ein relativ zeitaufwändiger und regelmäßig durchzuführender Wartungsaufwand. Die Entsorgung von Restwasser und von festen Brühresten (Trester), der üblicherweise in Form von Tresterkuchen nach einem Brühvorgang aus einer Brüheinheit ausgeworfen wird, stellt ein zentrales Problem dar.

Aus der CH 36 73 01 ist bekannt, verbrauchtes Kaffeepulver oder Trester mit Hilfe von Spülwasser in eine Abflussleitung der häuslichen Wasserversorgung abzuführen. Neuere Heißgetränkezubereitungsmaschinen, insbesondere solche für unterschiedliche Heißgetränke, wie Tee, Brühkaffee und Espresso, produzieren Brühreste allerdings in sehr fester und komprimierter Form. Trester ist durch hohe Drücke stark verdichtet und verpresst. Eine Abführung solcher Brühreste über die Kanalisation kann daher zu Verstopfungen im Ablauf-Kanalsystem führen, aber auch schon im Ablaufbereich der Heißgetränkezubereitungsmaschine selbst. In den Brühresten sind zudem Reste von Ölen enthalten, die Ablagerungen im Leitungssystem der Heißgetränkezubereitungsmaschine und Verstopfungen begünstigen.

Die FR 1 184 141 A offenbart einen Kaffeevollautomaten mit mehreren drehbar gelagerten Brühkammern, die nach dem Auslaugen des Kaffeemehls über eine Abführeinrichtung für das ausgelaugte Kaffeemehl und Reinigungseinrichtung für die Brühkammer verfügt. Die Reinigung und das Abführen erfolgt dabei über einen Wasserzulauf und einen Mischwasserauslauf.

Die GB 956 109 A offenbart einen Kaffeevollautomaten mit einer Reinigungsvorrichtung die eine Schneidvorrichtungen umfasst, die das (trockene) extrahierte Kaffeemehl über ein Rohr in einen Container schaufelt.

Aufgabe der vorliegenden Erfindung ist es daher, eine Heißgetränkezubereitungsmaschine bereitzustellen, die bei einer Entsorgung der Brühreste über eine Abführleitung, insbesondere in die Kanalisation, einen reibungslosen Ablauf bei möglichst geringer Gefahr von Verstopfungen ermöglicht.

Diese Aufgabe wird bei einer Heißgetränkezubereitungsmaschine der eingangs genannten Art mit einer Absperrvorrichtung zum Absperren eines Mischwasser-Auslaufs der Aufnahmevorrichtung getöst.

Die gezielte Zerkleinerung der verpressten kompakten Tresterkuchen ermöglicht deren gefahrlose Entsorgung über das häusliche Leitungssystem. Eine Zerkleinerung der Tresterkuchen kann auf vielerlei Weise mechanisch erfolgen, zum Beispiel durch Zerteilen, Trennen, Zerstückeln, Schneiden oder auch durch Aufprallenlassen auf eine Prallfläche. Der Testerkuchen kann aber auch in Wasser aufgelöst werden. Das Ergebnis der Zerkleinerung ist jedenfalls eine Suspension aus Frisch- oder Spülwasser aus der Wasserleitung und Kaffeesatzpartikeln aus dem Tresterkuchen. Sind die Brühreste ausreichend zerkleinert und mit Wasser vermischt, können sie einfacher abgeleitet werden. Die Gefahr einer Verstopfung von Abflüssen wird dadurch deutlich reduziert.

Die Heißgetränkezubereitungsmaschine verfügt besonders bevorzugt über einen Anschluss an ein Wasserver- und/oder -entsorgungssystem. Wasser kann so - ggf. durch Filtersysteme zusätzlich aufbereitet - direkt vom häuslichen Kaltwasserzulauf bezogen werden. Die Suspension bzw. das Mischwasser aus Brühresten und Spülwasser kann über die Abwasserkanalisation abgeführt werden.

Bevorzugt umfasst die Vorrichtung Schneiden bzw. Schneidvorrichtungen, die in der Aufnahmevorrichtung in Fallrichtung der Brühreste so angeordnet sind, dass sie die Brühreste während eines Eintreffens in der Aufnahmevorrichtung zerkleinern. Die Schneiden können in einer einfachen Ausführung feststehen und beispielsweise Drähte, Klingen oder in Fallrichtung gerichtete Spieße umfassen. Durch die kinetische Energie der Brühreste während des Falls in die Aufnahmevorrichtung erfolgt mit Hilfe der Schneidvorrichtung eine mechanische Zerkleinerung der Brühreste, die so, mit Wasser vermischt, abgeführt werden können.

Alternativ oder ergänzend hierzu kann die Schneidvorrichtung bewegbare Elemente umfassen, z.B. eine rotierbare Klinge. Sie kann die Brühreste besonders effektiv zerkleinern. Ähnlich wie bei einem Häcksler bzw. einem Mixer werden sie durch die Bewegung der Klinge deutlich schneller und gründlicher in kleinere Einheiten zerlegt. Gleichzeitig kann eine Bewegung, insbesondere eine Rotation der Klinge, eine Verwirbelung des Wasser bzw. Mischwassers bewirken, was der Durchmischung der Brühreste mit der Flüssigkeit und damit der erleichterten Abführung dient.

Die Vorrichtung umfasst eine Flüssigkeitspumpe. Die Flüssigkeitspumpe kann das Mischwasser in der. Aufnahmevorrichtung in Bewegung halten. Das Mischwasser wird dadurch nicht sofort abgeführt, sondern länger in der Aufnahmevorrichtung zurückgehalten. Während der längeren Verweildauer des Mischwassers kann sich der Tresterkuchen zuverlässig und vollständig lösen. Die Durchmischung mit Wasser wird also erleichtert und eine einfachere Abführung der Brühreste möglich. Die Verwirbelung bzw. Durchmischung der Brühreste mit Wasser verhindert zudem, dass sich die Brühreste an den Innenwänden der Aufnahmevorrichtung absetzen können.

Alternativ oder ergänzend kann die Vorrichtung eine Flüssigkeitsleitung umfassen, die mehrere Zulauföffnungen in die Aufnahmevorrichtung aufweist. Über die Zulauföffnungen in die Aufnahmevorrichtung kann die Flüssigkeit von verschiedenen Seiten in die Aufnahmevorrichtung zuströmen. Hierdurch wird erstens gewährleistet, dass Flüssigkeit gleichzeitig von verschiedenen Seiten auf die Brühreste treffen kann und sie so vollumfänglich durchnässt und durchmischt. Zweitens bewirkt die Zuleitung von Flüssigkeit von verschiedenen Seiten Flüssigkeitsverwirbelungen und -bewegungen, die die Brühreste mit der Flüssigkeit besser durchmischen und sie zugleich zerkleinern. Es entsteht ein ähnlicher Effekt wie bei einer Flüssigkeitspumpe, insbesondere dann, wenn die Zulauföffnungen so ausgerichtet sind, was sich in Kombination mit der Geometrie der Aufnahmevorrichtung eine automatische Verwirbelung der Flüssigkeit ergibt.

Bevorzugt umfasst die Vorrichtung weiterhin eine Flüssigkeitsführung, die im Betrieb entgegen einer Einströmrichtung der Flüssigkeit wirkt und eine Richtungsänderung der einströmenden Flüssigkeit bewirkt. Die Flüssigkeitsführung kann beispielsweise, wie angedeutet, durch die Geometrie der Aufnahmevorrichtung in Kombination mit einer Ausrichtung des Flüssigkeitszulaufs erzielt werden. Die Geometrie kann zum Beispiel kanalartige Führungen umfassen, aber auch einfach durch eine geeignete Anordnung der Aufnahmevorrichtung im Verhältnis zum Flüssigkeitszulauf erreicht werden, die eine Umlenkung der Flüssigkeit von ihrer Einströmrichtung in eine quer dazu gerichtete Stromrichtung ablenkt. Außerdem kann die Aufnahmevorrichtung durch entsprechende Formgebung, beispielsweise durch eine unregelmäßige, konisch zulaufende Form, so geometrisch ausgestaltet sein, dass sich wiederum eine Richtungsänderung der Flüssigkeit ergibt.

Erfingdungsgemäß ist eine Absperrvorrichtung vorgesehen, die den Auslauf der Aufnahmevorrichtung sperren kann. Sie verhindert, dass Flüssigkeit vom Flüssigkeitszulauf direkt in den Auslauf gelangt, ohne dass eine ausreichende Durchmischung und Zerkleinerung der Brühreste erfolgt wäre. Vielmehr wird der Mischwasserauslauf beispielsweise durch ein Ventil oder durch eine mechanische Barriere zunächst blockiert bis ausreichend Flüssigkeit in der Aufnahmevorrichtung vorhanden ist, um die Brühreste in der Flüssigkeit in ausreichendem Maße zu vermischen und zu zerkleinern. Erst dann wird der Mischwasser-Auslauf freigegeben, die Absperrvorrichtung entsperrt, so dass die ausreichend durchmischte Flüssigkeit abgeführt werden kann.

Eine weitere vorteilhafte Ausgestaltungsform der Erfindung sieht eine Pumpvorrichtung vor, die im Betrieb die Flüssigkeit entgegen einer Ausflussrichtung von Mischwasser bewegt. Die Pumpvorrichtung bewirkt also, dass das Mischwasser nicht sofort durch den Mischwasserauslauf abläuft, sondern entgegen der Ausflussvorrichtung bewegt wird. Das Mischwasser verbleibt wiederum für eine längere Zeit in der Brühwasser-Aufnahmevorrichtung und kann sich dabei ausreichend mit den Brühresten vermischen und sie durch Lösen zerkleinern.

Bevorzugt weist die Aufnahmevorrichtung einen Auffangtrichter zur Aufnahme von Brühresten auf. Hierdurch werden auch die Brühreste in eine Auffangrichtung geleitet, durch das Aufprallen an der Wandung des Auffangtrichters gegebenenfalls bereits (vor)zerkleinert und in Richtung des Auslaufs geleitet. Es erfolgt also eine gleichzeitige Zerkleinerung und Führung in Richtung des Mischwasser-Auslaufs.

Eine besondere geometrische Anordnung im Bereich der Aufnahmevorrichtung sieht vor, dass ein Mischwasserauslauf in einem Winkel zu einer Fallrichtung der Brühreste angeordnet ist, bevorzugt radial zu einer durch die Fallrichtung definierten Achse. Die Brühreste fallen also nicht einfach beispielsweise vertikal von der Brüheinheit durch die Aufnahmevorrichtung in Richtung des Mischwasserauslaufs, von wo sie direkt abgeführt

werden könnten, sondern sie werden zwangsweise quer zur Fallrichtung umgelenkt. Ein radialer Mischwasserauslauf verstärkt den Effekt, dass die Brühreste vor ihrem Eintreffen im Auslauf eine ausreichende Zeit in der Auffangvorrichtung verbleiben können und dadurch eine ausreichende Vermischung mit Flüssigkeit erfolgen kann.

Der Mischwasserauslauf kann mit zwei einander entgegen gesetzten Krümmungen ein Knie oder einen Siphon ausbilden. Ist das Knie nach oben ausgerichtet, bewirkt es eine Niveauerhöhung des Mischwassers zur weiteren Ableitung in eine Kanalisation. Das Knie gewährleistet, dass sich Brühreste höchstens in einem Bereich vor ihm in den Mischwasser-Auslauf absetzen können. Sollte der Mischwasser-Auslauf also doch einmal verstopft sein, so ist klar, dass eine Reinigung genau in dem Bereich vor dem Knie durchgeführt werden muss.

Die mechanischen Zerkleinerungsvorrichtungen verfolgen jedenfalls das Prinzip, den Tresterkuchen unabhängig von der und zunächst ohne die Gegenwart von Wasser zu zerkleinern. Die Pumpe, der ringförmige Flüssigkeitseinlauf und die übrigen hydraulisch wirksamen Vorrichtungen dienen dagegen dem Zweck, die Aufenthaltsdauer des Tresterkuchens in der Aufnahmevorrichtung möglichst zu verlängern, um ihn durch Lösen in Wasser zu zerkleinern und ihn möglicht vollständig in eine abpumpbare Suspension zu verwandeln. Eine Kombination beider Zerkleinerungsprinzipien verspricht selbstverständlich einen schnelleren Erfolg.

Das Prinzip der Erfindung wird im Folgenden anhand von Figuren beispielshalber noch näher erläutert. Es zeigen:
- Figur 1: eine schematische Darstellung einer erfindungsgemäßen Heißgetränkezubereitungsmaschine,
- Figur 2: eine schematische Schnittdarstellung einer Brüheinheit mit einer Brühreste- Aufnahmevorrichtung,
- Figur 3a: eine schematische Schnittdarstellung einer Aufnahmevorrichtung
- Figur 3b: eine Draufsicht auf eine Schneidevorrichtung,
- Figur 4: eine Draufsicht auf eine Aufnahmevorrichtung,
- Figur 5: eine Draufsicht auf den Boden einer Aufnahmevorrichtung,
- Figuren 6a, b: eine seitliche und eine horizontale Schnittdarstellung einer Aufnahmevorrichtung,
- Figur 7: eine Schnittdarstellung einer Aufnahmevorrichtung mit einem Auslauf,
- Figur 8: eine alternative Schnittdarstellung einer Aufnahmevorrichtung mit einem Mischwasserablauf.

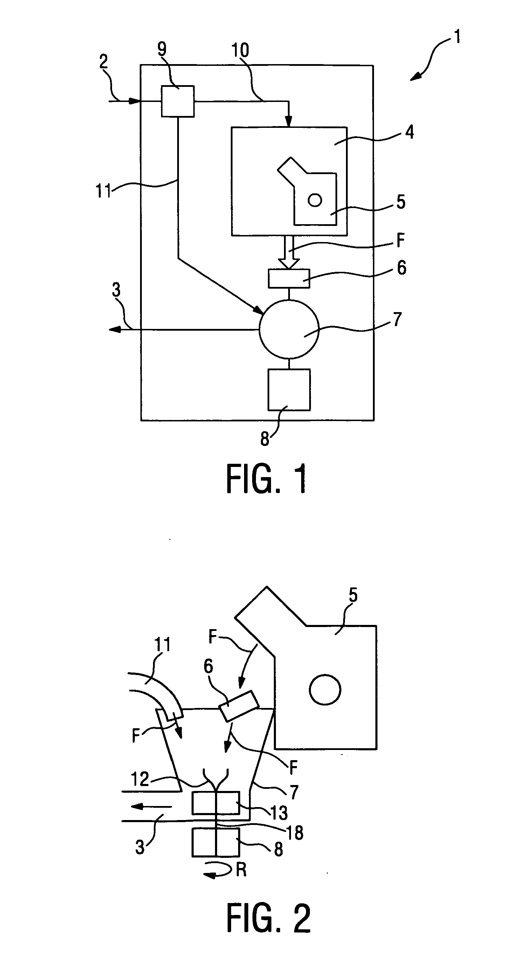

Figur 1 zeigt eine Heißgetränkezubereitungsmaschine 1 mit einem Flüssigkeitszulauf 2 und einem Mischwasser-Auslauf 3, zwischen denen folgende Elemente angeordnet sind: Ein Flüssigkeitsverteiler 9, eine Brühwasserzuleitung 10, eine Spülwasserzuleitung 11, eine Zubereitungseinheit 4 mit einer Brüheinheit 5 sowie eine Aufnahmevorrichtung 7 mit einer Pumpvorrichtung 8. Weiterhin sind Brühreste 6 in Form eines Tresterkuchens zu erkennen, die aus der Brüheinheit 5 in einer Fallrichtung F in die Aufnahmevorrichtung 7 für Brühreste fallen.

Über den Flüssigkeitszulauf 2 wird Versorgungswasser in das System eingespeist und über den Flüssigkeitsverteiler 9 in zwei unterschiedliche Versorgungsstränge, nämlich die Brühwasserzuleitung 10 und die Spülwasserzuleitung 11 verteilt.

Brühwasser gelangt über die Brühwasserzuleitung 10 in die Zubereitungseinheit 4 und kann dort in der Brüheinheit 5 zum Brühen von Kaffee verwendet werden. Nach dem Brühen des Kaffees wird der Tresterkuchen 6 in Fallrichtung F aus der Brüheinheit 5 ausgeworfen und gelangt in die Aufnahmevorrichtung 7 für Brühreste.

In der Aufnahmevorrichtung 7 wird der Tresterkuchen 6 mit Spülwasser aus der Spülwasserzuleitung 11 zu Mischwasser vermischt, was mit Hilfe der Pumpvorrichtung 8 erfolgt. Das Mischwasser wird über den Auslauf 3 in die Kanalisation abgeleitet. Die Pumpvorrichtung 8 dient dabei als Vorrichtung zur erleichterten Abführung der Brühreste. Sie gewährleistet eine Durchmischung des Spülwassers mit den Brühresten 6, so dass diese Brühreste 6 nicht in Form des Tresterkuchens, sondern in Form einer Wasser-Brühreste-Mischung, d.h. Mischwasser, in den Auslauf gelangen. Die Durchmischung vermeidet, dass sich Brühreste im Auslauf 3 absetzen können und den Auslauf 3 verstopfen.

Figur 2 zeigt diesen Mechanismus in einer Schnittdarstellung, die die Brüheinheit 5, die Spülwasserzuleitung 11, sowie den Auslauf 3 detaillierter darstellt. Die Aufnahmevorrichtung7 ist trichterförmig ausgebildet, das heißt sich in Fallrichtung F nach unten verjüngt. Die Pumpvorrichtung 8 ist über eine Achse 18 mit einem Flügelrad 13 verbunden. An der Oberseite des Flügelrades 13 sind nach oben, das heißt gegen die Fallrichtung F weisende Drähte bzw. Spieße 12 angebracht, die bei einem Auftreffen der Brühreste 6 die Brühreste 6 zerkleinern. Eine weitere Zerkleinerung erfolgt durch die Rotation des Flügelrads 13 in einer Rotationsrichtung R, wobei das Flügelrad 13 zusätzlich mit Klingen (nicht dargestellt) ausgestattet ist. Es dient neben der Zerkleinerung der Brühreste 6 vor allem ihrer Durchmischung mit Flüssigkeit, die aus der Spülwasserzuleitung 11 in Eintreffrichtung E zugeführt wird. Das so hergestellte Mischwasser wird über den Mischwasser-Auslauf 3 in Richtung einer Kanalisation abgeführt.

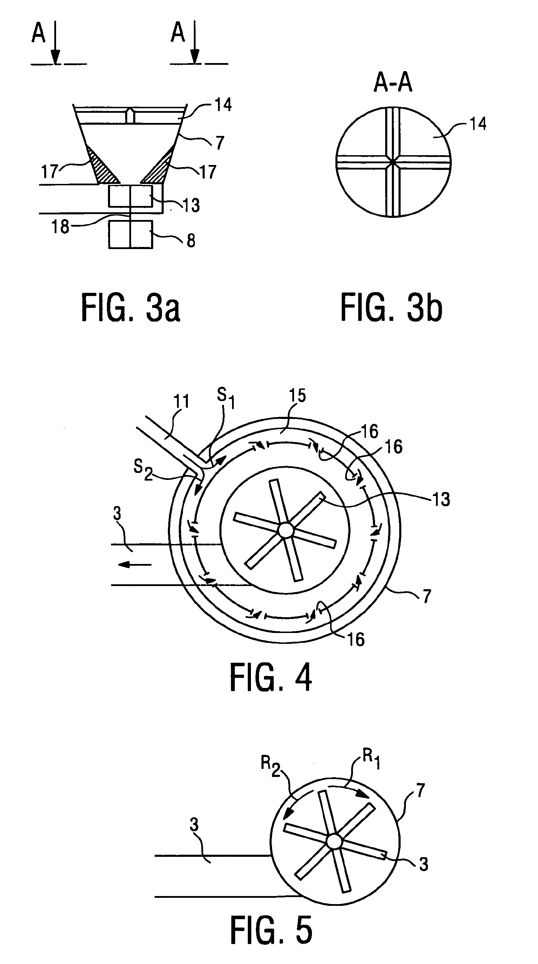

Figur 3a zeigt eine ähnliche Schnittdarstellung ohne Brüheinheit. Die Trichterform der Aufnahmevorrichtung wird dadurch verstärkt, dass an ihrer Innenseite ein Verstärkungselement 17 eingelassen ist. Es bildet einen umlaufenden Kragen in einem weiteren Bereich der Aufnahmevorrichtung 7 und sorgt dort für eine geringere Neigung der Seitenwände. Am oberen Rand der Aufnahmevorrichtung 7 ist eine Schneidevorrichtung 14 kreuzförmig und aus senkrecht zueinander verlaufenden Klingen angeordnet, deren Schneiden nach oben weisen. In der Draufsicht (Figur 3b) wirkt die Schneidevorrichtung 14 ähnlich wie ein Gitter, durch das die Brühreste 6 fallen. Dabei treffen die Brühreste 6 auf die Klingen der Schneidevorrichtung 14, so dass sie mechanisch vorzerkleinert werden. Das Verstärkungselement 17 bewirkt, dass Teile der vorzerkleinerten Brühreste 6 an der Wand der Aufnahmevorrichtung 7 auftreffen, wodurch zusätzlich zu dem der Schneidevorrichtung 14 ein weiterer Zerkleinerungseffekt erfolgt.

Figur 4 zeigt eine Draufsicht auf eine Aufnahmevorrichtung 7 mit einer Flüssigkeitsleitung 15, die ringförmig an der oberen Seite, etwa in Höhe der in Figur 3 dargestellten Schneidevorrichtung 14, angebracht ist. Die Flüssigkeitsleitung 15 umfasst zahlreiche Zulauföffnungen 16 in Richtung des Inneren der Aufnahmevorrichtung7.

Flüssigkeit wird über die Spülwasserzuleitung 11 in die Flüssigkeitsleitung 15 geleitet, wo sich die Ströme in zwei einander entgegengesetzte Strömungsrichtungen S₁, S₂ verzweigen. Die Flüssigkeit wird über die Zulauföffnungen 16 in die Aufnahmevorrichtung 7 geleitet. Durch die Vielzahl von Zulauföffnungen 16 benetzt die Flüssigkeit nahezu die gesamte Innenfläche der Aufnahmevorrichtung 7. Zugleich wird durch die unterschiedlichen Strömungsrichtungen S₁, S₂ eine Verwirbelung der Flüssigkeit in der Aufnahmevorrichtung 7 erzielt, die wiederum für eine verbesserte Durchmischung von Brühresten 6 und Flüssigkeit sorgt.

An der Unterseite bzw. am Boden der Aufnahmevorrichtung 7 ist das Flügelrad 13 im Auslauf 3 angeordnet. Der Mischwasser-Auslauf 3 ist radial zur Achse des Flügelrads 13 positioniert. Diese Achse des Flügelrads 13 entspricht einer durch die Fallrichtung F der Brühreste 6 definierten Achse (vgl. Figur 2). Hierdurch wird gewährleistet, dass die Brühreste zunächst in Richtung des Bodens der Aufnahmevorrichtung 7 gelangen, durchmischt werden und dann winkelig über den Mischwasser-Auslauf 3 abgeführt werden.

Figur 5 zeigt die Unterseite der Aufnahmevorrichtung 7 aus Figur 4 ohne ihren trichterförmigen Oberteil. Das Flügelrad 13 kann in zwei unterschiedlichen Richtungen R₁ und R₂ rotieren. Dies kann dazu genutzt werden, eine Abführung von Mischwasser gezielt zu regulieren. Dreht sich das Flügelrad 13 in der Rotationsrichtung R₁ im Uhrzeigersinn, wird Mischwasser beschleunigt in den Mischwasser-Auslauf 3 befördert. Dreht es sich hingegen in einer Rotationsrichtung R₂ entgegen dem Uhrzeigersinn, wird der Hauptanteil des Mischwassers am Auslauf 3 vorbei bewegt, während nur ein geringerer Anteil abgeführt wird. Dadurch kann eine weitere Durchmischung von Brühresten 6 und Wasser in der Aufnahmevorrichtung 7 erfolgen. Eine derartige Richtungsführung der Mischwasserbewegung stellt daher eine weitere einfache Möglichkeit dar, wie eine ausreichende Durchmischung von Brühresten 6 und Spülwasser erreicht werden kann.

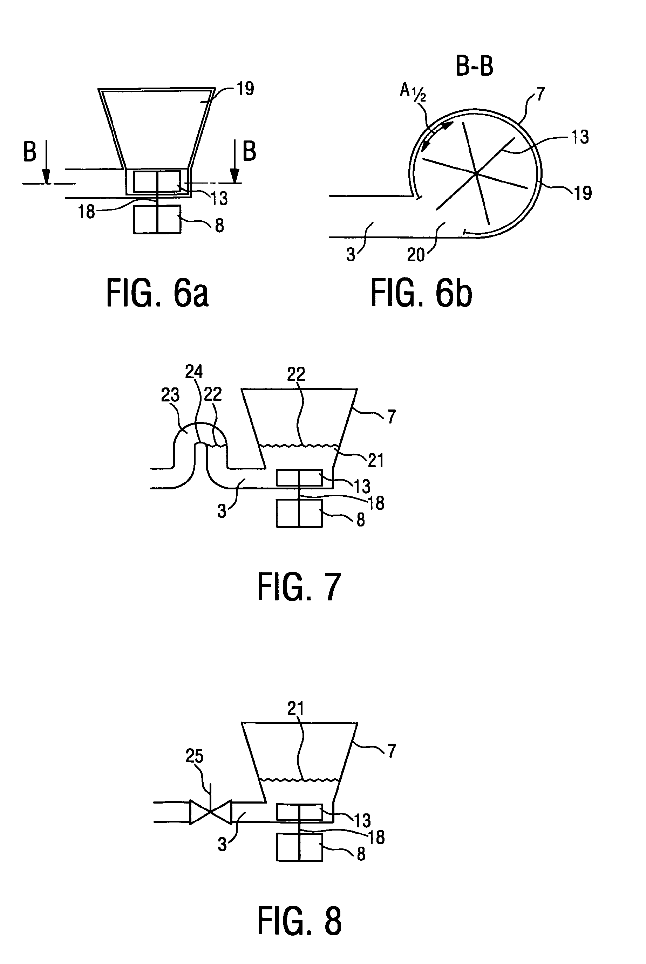

Ein ähnlicher Effekt kann auch durch eine Absperrvorrichtung 19, wie sie in den Figuren 6a und 6b dargestellt ist, erzielt werden. Sie ist als zylindrisches Einbauteil in den unteren Abschnitt der Aufnahmevorrichtung 7 eingesteckt (Figur 6a). Sie weist eine Auslassöffnung 20 auf, die so positioniert werden kann, dass sie den Zugang zum Mischwasser-Auslauf 3 freigibt (Figur 6b). Wird sie hingegen von dort in einer Drehrichtung A_{1/2} im oder gegen den Uhrzeigersinn verdreht, so sperrt sie den Zufluss zum Auslauf 3 ab.

Eine alternative Form des Rückhaltens von Mischwasser 21 ist in Figur 7 dargestellt. Im Auslauf 3 ist eine Rohrbiegung bzw. ein Knie 23 angeordnet. Es bewirkt, dass Mischwasser 21 erst bei einem Erreichen eines Wasserspiegels 22 in Höhe des Scheitelpunkts 24 des Knies 23 weiter abgeführt werden kann. Dies Anordnung hat neben dem Rückhalten von Mischwasser 21 einen weiteren Vorteil: Wenn sich Brühreste 6 im Laufe der Zeit im Auslauf 3 absetzen sollten, so im Wesentlichen vor dem Knie 23, da dort eine strömungsberuhigte Zone vorliegt. Stromab des Knies 23 ist durch die Beschleunigung des Mischwassers 21 in Richtung Abfluss in der Regel eine ausreichende Fließgeschwindigkeit gewährleistet. Bei einer eventuellen Verstopfung des Auslaufs 3 ist daher davon auszugehen, dass die Verstopfung sich vor dem Knie 23 befinden kann.

Eine letzte Möglichkeit des Rückhaltens von Mischwasser 21 in der Aufnahmevorrichtung 7 besteht in einem Absperrventil 25, wie es in Figur 8 dargestellt ist. Es kann im Auslauf 3 oder davor angeordnet sein. Sein Effekt ist ähnlich wie der der Absperrvorrichtung 19 aus Figur 6, nur dass es mit anderen Methoden regulierbar ist. Die Absperrvorrichtung 19, das Knie 23 und das Absperrventil 25 werden aufgrund des ähnlichen durch sie erreichbaren Effekts vorzugsweise alternativ zueinander verwendet; eine Kombination dieser Elemente kann aber Sinn haben, um alle durch sie generierten Nebeneffekte bzw. Vorteile gleichzeitig nutzbar zu machen.

Da es sich bei der vorhergehenden, detailliert beschriebenen Heißgetränkezubereitungsmaschine um ein Ausführungsbeispiel handelt, kann sie in üblicher Weise vom Fachmann in einem weiten Umfang modifiziert werden, ohne den Bereich der Erfindung zu verlassen. Insbesondere können auch die konkreten Ausgestaltungen der Aufnahmevorrichtung 7 in anderer, beispielsweise geometrischer abweichender Form als der hier beschriebenen erfolgen. Ebenso kann der Auslauf 3 in einer anderen Form ausgestaltet werden, wenn dies aus Platzgründen bzw. designerischen Gründen notwendig ist. Weiterhin schließt die Verwendung der unbestimmten Artikel "ein" bzw. "eine" nicht aus, dass die betreffenden Merkmale auch mehrfach vorhanden sein können.

### Bezugszeichenliste

- 1: Heißgetränkezubereitungsmaschine
- 2: Flüssigkeitszulauf
- 3: Mischwasser-Auslauf
- 4: Zubereitungseinheit
- 5: Brüheinheit
- 6: Brühreste / Tresterkuchen
- 7: Brühreste-Aufnahmevorrichtung
- 8: Pumpvorrichtung
- 9: Flüssigkeitsverteiler
- 10: Brühwasserzuleitung
- 11: Spülwasserzuleitung
- 12: Drähte / Spieße
- 13: Flügelrad
- 14: Schneidevorrichtung
- 15: Flüssigkeitsleitung
- 16: Zulauföffnungen
- 17: Trichter-Verstärkungselement
- 18: Achse
- 19: Absperrvorrichtung
- 20: Auslassöffnung
- 21: Mischwasser
- 22: Wasserspiegel
- 23: Rohrbiegung, Knie
- 24: Scheitelpunkt
- 25: Absperrventil

- A_{1/2}: Drehrichtung
- E: Eintreffrichtung
- F: Fallrichtung
- R, R₁, R₂: Rotationsrichtungen
- S₁, S₂: Strömungsrichtungen

## Patentansprüche

1. Heißgetränkezubereitungsmaschine (1) mit einer Brüheinheit (5), einer Aufnahmevorrichtung (7) für feste Brühreste (6), einem Flüssigkeitszulauf (2), einem Anschluss (11) des Flüssigkeitszulaufs (2) zum Durchmischen der Brühreste (6) mit Flüssigkeit, und einer eine Flüssigkeitspumpe (8) umfassende Zerkleinerungsvorrichtung der Brühreste (6), **gekennzeichnet durch** eine Absperrvorrichtung (19, 24, 25) zum Absperren eines Mischwasser-Auslaufs (3) der Aufnahmevorrichtung (7).

2. Heißgetränkezubereitungsmaschine gemäß Anspruch 1, **dadurch gekennzeichnet, dass** die Zerkleinerungsvorrichtung Schneiden (12, 14) umfasst, die in der Aufnahmevorrichtung (7) in Fallrichtung (F) der Brühreste (6) angeordnet sind.

3. Heißgetränkezubereitungsmaschine gemäß Anspruch 1 oder 2, **dadurch gekennzeichnet, dass** die Zerkleinerungsvorrichtung eine bewegbare, insbesondere eine rotierbare Klinge umfasst.

4. Heißgetränkezubereitungsmaschine gemäß einem der vorhergehenden Ansprüche, **dadurch gekennzeichnet, dass** die Zerkleinerungsvorrichtung eine Flüssigkeitsleitung (15) umfasst, die mehrere Zulauföffnungen (16) in die Aufnahmevorrichtung (7) aufweist.

5. Heißgetränkezubereitungsmaschine gemäß einem der vorhergehenden Ansprüche, **dadurch gekennzeichnet, dass** die Zerkleinerungsvorrichtung eine Flüssigkeitsführung umfasst, die im Betrieb entgegen einer Einströmrichtung (E) der Flüssigkeit wirkt und eine Richtungsänderung der einströmenden Flüssigkeit bewirkt.

6. Heißgetränkezubereitungsmaschine gemäß einem der vorhergehenden Ansprüche, **gekennzeichnet durch** eine Pumpvorrichtung (8), die im Betrieb eine Flüssigkeitsbewegung entgegen einer Ausflussrichtung von Mischwasser (21) bewirkt.

7. Heißgetränkezubereitungsmaschine gemäß einem der vorhergehenden Ansprüche, **gekennzeichnet durch** einen Auffangtrichter (17) zur Aufnahme von Brühresten (6) in der Aufnahmevorrichtung(7).

8. Heißgetränkezubereitungsmaschine gemäß einem der vorhergehenden Ansprüche, **gekennzeichnet durch** einen in einem Winkel zu einer Fallrichtung (F) der Brühreste (6) angeordnete Mischwasser-Auslauf (3), bevorzugt ein radial zu einer **durch** die Fallrichtung (F) definierten Achse definierte Mischwasser-Auslauf (3).

## Claims

1. Hot beverage preparation machine (1) with a brewing unit (5), a receiving device (7) for solid brewing residues (6), a liquid feed (2), a connection (11) of the liquid feed (2) for intermixing the brewing residues (6) and liquid, and a comminuting device, which comprises a liquid pump (8), for the brewing residues (6), **characterised by** a blocking device (19, 24, 25) for blocking a mixing water outlet (3) of the receiving device (7).

2. Hot beverage preparation machine according to claim 1, **characterised in that** the comminuting device comprises cutters (12, 14) which are arranged in the receiving device (7) in the drop direction (F) of the brewing residues (6).

3. Hot beverage preparation machine according to claim 1 or 2, **characterised in that** the comminuting device comprises a movable, particularly a rotatable, blade.

4. Hot beverage preparation machine according to any one of the preceding claims, **characterised in that** the comminuting device comprises a liquid duct (15) having a plurality of feed openings (16) in the receiving device (7).

5. Hot beverage preparation machine according to any one of the preceding claims, **characterised in that** the comminuting device comprises a liquid guide which in operation acts against an inflow direction (E) of the liquid and produces a directional change of the inflowing liquid.

6. Hot beverage preparation machine according to any one of the preceding claims, **characterised by** a pumping device (8) which in operation produces a liquid movement against an outflow direction of mixing water (21).

7. Hot beverage preparation machine according to any one of the preceding claims, **characterised by** a collecting funnel (17) for reception of brewing residues (6) in the receiving device (7).

8. Hot beverage preparation machine according to any one of the preceding claims, **characterised by** a mixing water outlet (3) arranged at an angle to a drop direction (F) of the brewing residues (6), preferably a mixing water outlet (6) defined radially with respect to an axis defined by the drop direction (F).

## Revendications

1. Machine de préparation de boissons chaudes (1) comprenant une unité de percolation (5), un dispositif de logement (7) pour des restes solides de percolation (6), une arrivée de liquide (2), un branchement (11) de l'arrivée de liquide (2) pour le mélange des restes de percolation (6) avec du liquide, et un dispositif de broyage, comprenant une pompe à liquide (8), des restes de percolation (6), **caractérisée par** un dispositif d'arrêt (19, 24, 25) pour l'arrêt d'une sortie d'eau de mélange (3) du dispositif de logement (7).

2. Machine de préparation de boissons chaudes selon la revendication 1, **caractérisée en ce que** le dispositif de broyage comprend des tranchants (12, 14), qui sont disposés dans le dispositif de logement (7) dans le sens de chute (F) des restes de percolation (6).

3. Machine de préparation de boissons chaudes selon la revendication 1 ou 2, **caractérisée en ce que** le dispositif de broyage comprend une lame mobile, en particulier une lame rotative.

4. Machine de préparation de boissons chaudes selon l'une des revendications précédentes, **caractérisée en ce que** le dispositif de broyage comprend une conduite de liquide (15), qui présente plusieurs ouvertures d'arrivée (16) dans le dispositif de logement (7).

5. Machine de préparation de boissons chaudes selon l'une des revendications précédentes, **caractérisée en ce que** le dispositif de broyage comprend un guide de liquide, qui agit pendant le fonctionnement dans le sens contraire à un sens d'entrée (E) du liquide et entraîne un changement de direction du liquide entrant.

6. Machine de préparation de boissons chaudes selon l'une des revendications précédentes, **caractérisée par** un dispositif de pompage (8), qui entraîne pendant le fonctionnement un mouvement de liquide dans le sens contraire à un sens d'écoulement d'eau de mélange (21).

7. Machine de préparation de boissons chaudes selon l'une des revendications précédentes, **caractérisée par** un entonnoir collecteur (17) pour le logement de restes de percolation (6) dans le dispositif de logement (7).

8. Machine de préparation de boissons chaudes selon l'une des revendications précédentes, **caractérisée par** une sortie d'eau de mélange (3), disposée dans un angle par rapport à un sens de chute (F), des restes de percolation (6), de préférence une sortie d'eau de mélange (3) définie radialement par rapport à un axe défini par le sens de chute (F).
